# EUROPEAN PATENT SPECIFICATION

(11) **EP 3 842 499 B1**
(45) Date of publication and mention of the grant of the patent: **18.01.2023**
(21) Application number: 19852205.4
(22) Date of filing: 24.07.2019
(51) Int. Cl.: C09D 11/30, B32B 27/00, B32B 27/40, B41M 5/00, B32B 7/12, B32B 27/08, B32B 27/30, B32B 27/36, C09D 11/322, C09D 11/102, B32B 27/32, B32B 27/34

(54) **WATER-BASED INKJET INK COMPOSITION FOR LAMINATING, PRINTED MATTER USING SAME, LAMINATED PRODUCT, AND LAMINATING METHOD**
TINTENZUSAMMENSETZUNG AUF WASSERBASIS ZUM LAMINIEREN, BEDRUCKTES MATERIAL UNTER VERWENDUNG DESSELBEN, LAMINIERTES PRODUKT UND LAMINIERUNGSVERFAHREN
COMPOSITION D'ENCRE POUR JET D'ENCRE À BASE AQUEUSE POUR STRATIFICATION, MATIÈRE IMPRIMÉE UTILISANT CELLE-CI, PRODUIT STRATIFIÉ ET PROCÉDÉ DE STRATIFICATION

(30) Priority: 20.08.2018 JP 2018154169
(43) Date of publication of application: 30.06.2021
(73) Proprietor: Sakata INX Corp., Osaka-shi, Osaka 550-0002 (JP)
(72) Inventor: SATO, Yoichi, Osaka-shi, Osaka 550-0002 (JP); MORIYASU, Kazuki, Osaka-shi, Osaka 550-0002 (JP); TAKAHASHI, Eri, Osaka-shi, Osaka 550-0002 (JP); SANO, Takaaki, Osaka-shi, Osaka 550-0002 (JP)
(74) Representative: Cabinet Beau de Loménie
(86) International application number: PCT/JP2019/029037
(87) International publication number: WO 2020/039832

(56) References cited:
- WO-A1-2012/173032
- JP-A- H04 178 418
- JP-A- 2012 250 416

## Description

### TECHNICAL FIELD

The present invention relates to an aqueous inkjet ink composition for lamination particularly suitable for producing flexible packaging containers, which have been decreasing in lot size and increasing in variety. The present invention also relates to a printed product and a laminated product each including the aqueous inkjet ink composition, and a laminating method using the aqueous inkjet ink composition.

### BACKGROUND ART

The recent diversification of lifestyles has diversified people's values. Naturally, people prioritize their own values when selecting items. Consequently, diversification expands the range of choices. Providers view diversification as a business opportunity to discover new needs, and more and more companies are starting to use it as a strategy to expand their operations.

For example, novel, unique products are now often on shelves in the food sections in supermarkets or convenience stores. Many of such products are seen especially among private brand products of national chain stores. This is considered to reflect their business strategy; namely, taking advantage of directly knowing customer trends, they quickly provide products meeting customers' diverse needs, thereby trying to differentiate them from other companies so as to attract customers and increase sales.

Of course, food manufacturers also always fear falling behind in product development as a result of not keeping up with customers' preferences and needs. Manufactures relying only on basic items may fall behind the trend of diversification. There is thus growing movement to develop new products one after another, including some adventurous products.

Diversification not only creates a new category of products, but also leads to segmentation. For example, products in the same food category may have more flavors, such as curry flavor, sauce flavor, or wasabi flavor. Some products may contain specially selected local specialties. Other than such segmentation directly associated with food ingredients, there may be segmentation by price range or sex.

However, the increase in product categories and the segmentation do not mean an increase in the overall demand. Thus, the sales of an individual product decline in inverse proportion to an increase in the variety of the products on the market. For this reason, the manufacturing floors of flexible food packaging containers are experiencing a rapid decrease in lot size and increase in product variety.

In the field of flexible food packaging containers using plastic films, primary importance is placed on printing quality because the finish quality of printed images is directly linked with sales. For this reason, gravure printing, which is suitable to obtain decorative printed products (excellent printed image quality), has been used.

Gravure printing uses printing plates. Printing plates are obtained by forming cells that hold ink on the surface of a cylindrical metal roll by a method such as chemical corrosion, mechanical engraving, or laser engraving, followed by plating with metal chromium to increase abrasion resistance and corrosion resistance. Such printing plates have high durability, but are very expensive and time-consuming to produce. Thus, an economical printing method is to produce as many printed products as possible and thereby reduce the cost and time per printed product.

In the field of food packaging containers, there used to be many jobs that involve printing the same product in large quantities, such as printing of bags of chips or noodles. This allowed gravure printing to be a sufficiently economical printing method. This is another major reason that gravure printing has been used in this field. However, the advantage of this printing method goes against the recent trend of a decrease in lot size and an increase in product variety. Considering that the diversification of lifestyles is expected to further progress, the printing method for the field of flexible food packaging containers is reaching a turning point.

In such a situation of the art, inkjet printing has recently attracted attention. This method can print any design without a printing plate, which is expensive and time-consuming to produce and has a fixed printing design. In addition, use of aqueous inks is increasingly demanded from various standpoints such as reduction of residual solvent, improvement of the printing work environment, prevention of air pollution, and fire safety, which have often been concerns for food packaging containers of laminated composite film.

Many aqueous inkjet ink compositions have been proposed particularly for use in food packaging containers of laminated composite film (see Patent Literatures 1, 2, and 3, for example).

### CITATION LIST

### - Patent Literature

Patent Literature 1: JP 2012-250416 A
Patent Literature 2: JP 2013-001755 A
Patent Literature 3: JP 2013-001775 A

### SUMMARY OF INVENTION

### - Technical problem

Aqueous inkjet ink compositions essentially have poor adhesion to plastic films. Consequently, aqueous inkjet ink compositions particularly cause the following disadvantages in packaging containers formed using laminated composite film.

In lamination, first, for example, images or letters are printed in full color with aqueous inkjet ink compositions of yellow, red, blue, and black colors on a transparent plastic film (hereinafter also referred to as a base film) as a printing substrate. However, the printed film at this state does not give sufficient contrast between the images or letters and the background. In addition, many food packaging applications require high light-shielding properties. Thus, white backing using white ink is performed over a wide area such that it covers the entire printed surface. Next, a hot-melt sealant film is attached directly to the white ink printed side using an adhesive, or attached after other function layer(s) are laminated. Alternatively, molten resin is pressure-bonded in a thin film shape to form a layer. Through this process, a composite film is produced.

In producing a bag-shaped packaging container using the obtained composite film, the ends of the film corresponding to the ends of the bag are melt-sealed with heat, with the hot-melt sealant film being on the inside, so that the film is formed into a bag shape. This method is called "back printing" because the printed surface is positioned at the back of the base film when seen from the outside of the packaging container.

If the aqueous inkjet ink compositions between the base film and the sealant film have insufficient adhesion to, for example, the base film, the base film and the aqueous inkjet ink compositions may separate from each other during processes such as food packing, transportation, and display. This may cause breaking of the packaging container. Moreover, if the adhesion to the base film is lower than the breaking strength of the sealant film, the container highly probably cannot be opened because trying to open the container may cause what is called a "double bag state", in which the base film on the outside is opened while the sealant film on the inside remains unopened.

The base film may include various types of plastic film, from polyolefin non-polar materials (e.g., polypropylene, PP) to polyester (e.g., polyethylene terephthalate, PET) or polyamide (e.g., nylon, Ny) polar materials, depending on the use of the packaging container. In recent years, methods of applying surface treatment agents (primer compositions) have been developed for different types of base film so as to improve printability, adhesion to aqueous inkjet ink compositions, and the like.

However, the need for changing the primer composition with every change of the base film causes complexity in the printing work environment for decreased lot sizes and increased product variety. Meanwhile, oriented polypropylene (OPP) films are one of the most difficult films for aqueous inkjet ink compositions to adhere to. For OPP films, use of primer compositions containing chlorinated polypropylene (chlorinated PP), which has a similar crystalline structure to OPP, is known to be more effective.

Considering the above, if a primer composition containing a material such as chlorinated polypropylene is used, and if there is an aqueous inkjet ink composition having good adhesion to polyester and polyamide base films, the major base films for food packaging containers can be handled with a combination of one type of primer composition and one type of aqueous inkjet ink composition. Such a combination of a primer composition and an aqueous inkjet ink composition for printing would be highly versatile, but such a combination has yet to be found.

The present invention thus aims to provide the following aqueous inkjet ink composition for lamination so as to enable efficient adaptation to the recent decrease in lot size and increase in product variety by using inkjet printing in printing of packaging containers (e.g., food packaging containers).

Specifically, the aqueous inkjet ink composition for lamination, since it is aqueous, has various advantages such as reduction of residual solvent, improvement of the printing work environment, prevention of air pollution, and fire safety. Moreover, the aqueous inkjet ink composition used in combination with a primer composition containing a material such as chlorinated polypropylene is highly versatile and can be applied to various types of base film. The aqueous inkjet ink composition also enables production of a food packaging container that does not break at least during processes such as transportation and display and can be easily opened without causing the double bag state.

### - Solution to problem

The present inventors first found out that an inkjet ink composition containing a polyurethane resin obtained from specific reaction components as a binder resin has excellent storage stability and ejection stability as well as excellent applicability (basic properties such as decorative printing quality (printed image quality) and adhesion) to various base films used in flexible packaging containers.

The inkjet ink composition was also demonstrated to maintain the level of applicability to the various base films used in flexible packaging containers even when used in combination with primer compositions applied to improve the applicability of aqueous ink compositions.

For OPP films used as base films, the inventors combined the inkjet ink composition with a primer composition containing chlorinated PP, which is suitably applicable to OPP. For OPP films, which are one of the most difficult films for aqueous ink compositions to have applicability to, the combination utilizes the applicability-improving effect of the primer composition on aqueous inkjet ink compositions. For other plastic films, the combination was expected to create a synergistic effect of the high applicability of the ink composition itself and the applicability-improving effect of the primer composition on aqueous ink compositions. As a result, the inkjet ink composition showed unprecedented but desired results: excellent applicability not only to OPP base films but to PET or Ny base films. In other words, a combination of one type of primer composition and the above inkjet ink composition has applicability to almost all the major base films used in flexible packaging containers.

Furthermore, the inventors confirmed that when these three types of plastic film as base films are coated and printed with the combination of the primer composition and the inkjet ink composition, and the resulting printed products are subjected to lamination and bag production, all of the base films can achieve high laminate strength (peel strength between the base film and the sealant film) and seal strength (peel strength at the melt-sealed portion of the sealant film of the bag).

As a result of intensive studies based on the above findings, the present inventors developed an aqueous inkjet ink composition for lamination capable of achieving all the above aims, and thus completed the present invention.

The present invention relates to an aqueous inkjet ink composition for lamination, containing a colorant, an alkali-soluble or self-emulsifying aqueous polyurethane resin satisfying the following condition 1, and an aqueous medium:
Condition 1: the alkali-soluble or self-emulsifying aqueous polyurethane resin is a reaction product of reaction components including hexamethylene diisocyanate, at least one selected from the group of polyester diol compounds represented by the following formula 1, and an acid group-containing diol compound: 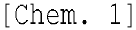 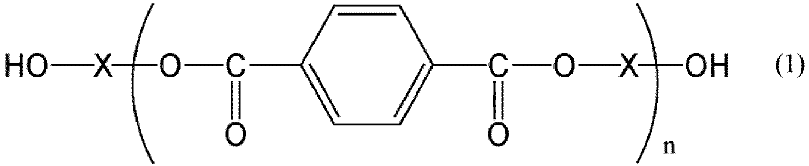 wherein Xs are each independently a hydrocarbon group represented by -CH₂-CH₂-CH₂-CH₂-CH₂-CH₂- or -CH₂-CH₂-CH(CH₃)-CH₂-CH₂-, and n is an integer of 2 to 20.

The amount of the alkali-soluble or self-emulsifying aqueous polyurethane resin is preferably 1.0 to 10.0 parts by mass relative to the total mass of the aqueous inkjet ink composition for lamination.

The alkali-soluble or self-emulsifying aqueous polyurethane resin preferably has a weight average molecular weight of 2,000 to 100,000.

The alkali-soluble or self-emulsifying aqueous polyurethane resin preferably has an acid value of 5 to 100 mg KOH/g.

The present invention also relates to a printed product including a base film, a coating layer containing a primer composition, and a printed layer containing the aqueous inkjet ink composition for lamination of the present invention, the base film, the coating layer, and the printed layer being laminated in the stated order, wherein the primer composition satisfies the following condition 2:
Condition 2: the primer composition contains a water-soluble polyvalent metal salt, a chlorinated polyolefin emulsion, at least one selected from the group consisting of an acrylic emulsion and a vinyl acetate emulsion, and water, or contains a water-soluble polyvalent metal salt, a hydrazine derivative containing at least two hydrazine residues, at least one selected from the group consisting of an acrylic emulsion and a vinyl acetate emulsion, and water.

The present invention also relates to a laminated product including the printed product of the present invention and a sealant film laminated on a surface of the printed layer of the printed product, the surface being opposite to a surface having the coating layer thereon.

The present invention also relates to a laminating method including forming a coating layer by applying a primer composition to one surface of a base film, subsequently forming a printed layer by printing the aqueous inkjet ink composition for lamination of the present invention on a surface of the coating layer by inkjet printing, subsequently applying an adhesive for lamination to a surface of the printed layer, and then laminating a sealant film.

### - Advantageous Effects of Invention

The aqueous inkjet ink composition of the present invention contains a colorant, an alkali-soluble or self-emulsifying aqueous polyurethane resin satisfying the following condition 1, and an aqueous medium.

### Condition 1

The alkali-soluble or self-emulsifying aqueous polyurethane resin is a reaction product of reaction components including hexamethylene diisocyanate, at least one selected from the group of polyester diol compounds represented by the following formula 1, and an acid group-containing diol compound 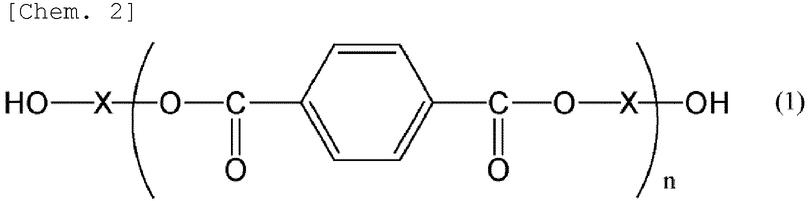 (wherein Xs are each independently a hydrocarbon group represented by -CH₂-CH₂-CH₂-CH₂-CH₂-CH₂- or -CH₂-CH₂-CH(CH₃)-CH₂-CH₂-, and n is an integer of 2 to 20.)

The aqueous inkjet ink composition for lamination of the present invention, since it is aqueous, has various advantages such as reduction of residual solvent, improvement of the printing work environment, prevention of air pollution, and fire safety. The aqueous inkjet ink composition also enables production of packaging containers (e.g., food packaging containers) by inkjet printing, and thereby enables effective adaptation to the recent decrease in lot size and increase in product variety. Moreover, for example, the aqueous inkjet ink composition for lamination of the present invention used in combination with a primer composition containing a material such as chlorinated polypropylene is highly versatile and applicable to various types of base films, and also enables production of a food packaging container that does not break at least during processes such as transportation and display and can be easily opened without causing the double bag state.

The present invention is described in detail below.

### DESCRIPTION OF EMBODIMENTS

### <Colorant>

The aqueous inkjet ink composition for lamination of the present invention contains a colorant.

The colorant may be any of various inorganic pigments, organic pigments, and dyes commonly used in inkjet inks.

Examples of inorganic pigments include colored pigments such as titanium oxide, colcothar, Antimony red, Cadmium yellow, Cobalt blue, Prussian blue, ultramarine, carbon black, and graphite, and extenders such as calcium carbonate, kaolin, clay, barium sulfate, aluminum hydroxide, and talc. Examples of organic pigments include soluble azo pigments, insoluble azo pigments, azo lake pigments, condensed azo pigments, copper phthalocyanine pigments, and condensed polycyclic pigments. Examples of dyes include water-soluble dyes such as acidic dyes, direct dyes, and basic dyes. These may be used alone or in combination of two or more thereof.

When the aqueous inkjet ink composition for lamination of the present invention is used in printing of a food packaging container, the colorant used is preferably a pigment.

Among the above colorants, when a pigment that cannot be directly dispersed in an aqueous medium is used, the pigment is preferably dispersed in an aqueous medium using a low molecular weight or high molecular weight pigment-dispersing component, and used as an ink base. The low molecular weight pigment-dispersing component may be a known low molecular weight pigment dispersant. The high molecular weight pigment-dispersing component may be a known high molecular weight resin for dispersing a pigment, for example, but is a polymer compound to which an ionic group (e.g., an acid group) and preferably a group having adsorbability to a pigment surface have been introduced. Preferably, the high molecular weight pigment-dispersing component is dissolved or dispersed in an aqueous medium in the presence of a compound (e.g., a basic compound) that generates an ion pair with the ionic group of the high molecular weight pigment-dispersing component, and used as an aqueous resin varnish.

Examples of the high molecular weight pigment-dispersing component include various copolymer resins such as acrylic acid resins, styrene-acrylic acid resins, styrene-maleic acid resins, and styrene-acrylic-maleic acid resins. For pigments dispersible in the alkali-soluble or self-emulsifying aqueous polyurethane resin described later, the alkali-soluble or self-emulsifying aqueous polyurethane resin described later may be used as the high molecular weight pigment-dispersing component.

Among monomer components for the synthesis of the above listed copolymer resins, examples of monomers having a carboxy group include acrylic acid, methacrylic acid, crotonic acid, itaconic acid, maleic acid, fumaric acid, 2-carboxyethyl (meth)acrylate, 2-carboxypropyl (meth)acrylate, maleic anhydride, monoalkyl maleate, citraconic acid, citraconic anhydride, and monoalkyl citraconate.

In order to improve the adsorbability to pigments, (meth)acrylates having a C6-C20 long-chain alkyl group are preferred. Particularly preferred among these are, for example, 2-ethylhexyl (meth)acrylate, octyl (meth)acrylate, stearyl (meth)acrylate, lauryl (meth)acrylate, and 2-hydroxystearyl (meth)acrylate. Examples of styrene monomers that can be used include styrene, α-styrene, and vinyltoluene.

Examples of other monomer components that can be used include (meth)acrylates such as methyl (meth)acrylate, ethyl (meth)acrylate, propyl (meth)acrylate, isopropyl (meth)acrylate, butyl (meth)acrylate, and hexyl (meth)acrylate, hydroxyethyl (meth)acrylate, acrylamide, N-methylolacrylamide, cyclohexyl (meth)acrylate, and benzyl (meth)acrylate.

From the standpoint of the dispersibility and dispersion stability of the pigment, the copolymer resin preferably has an acid value of 40 to 300 mg KOH/g, more preferably 70 to 250 mg KOH/g.

Moreover, from the standpoint of the dispersibility and dispersion stability of the pigment and the standpoint of imparting appropriate viscosity, the copolymer resin preferably usually has a weight average molecular weight of 3,000 to 200,000, more preferably 10,000 to 50,000.

The amount of the copolymer resin added is preferably 10 to 200 parts by mass relative to 100 parts by mass of the pigment.

The copolymer resin is dissolved or dispersed in the later-described aqueous medium containing water and an optional water-miscible organic solvent in the presence of a basic compound, and used as an aqueous resin varnish.

The acid value as used herein is a theoretical acid value determined by arithmetically determining the theoretical number of milligrams needed to neutralize 1 g of the copolymer resin (the alkali-soluble or self-emulsifying aqueous polyurethane resin described later) based on the composition of the monomers used to synthesize the copolymer resin.

The weight average molecular weight as used herein can be measured by gel permeation chromatography (GPC). For example, it can be determined as a polystyrene-equivalent weight average molecular weight by chromatography using Water 2690 (produced by Waters Corporation) as a GPC device and PLgel 5 µ MIXED-D (produced by Agilent Technologies, Inc.) as a column.

The aqueous medium used in the ink base contains water and optionally a water-miscible organic solvent.

The water is preferably ion-exchanged water from which metal ions and the like have been removed, or distilled water.

In order to impart properties such as storage stability, ejection stability, and ink flying properties to the aqueous inkjet ink composition for lamination of the present invention, the aqueous medium may contain a water-miscible organic solvent such as a monoalcohol, a polyalcohol, a lower alkyl ether of a polyalcohol, a ketone, an ether, an ester, or a nitrogen-containing compound. These may be used alone or in combination of two or more thereof.

The amount of the aqueous medium used in the ink base is preferably 10 to 60 parts by mass, more preferably 15 to 45 parts by mass relative to 100 parts by mass of the ink base.

The colorant is preferably contained in an amount within the range of 0.5 to 20 parts by mass, more preferably 1.0 to 15 parts by mass relative to 100 parts by mass of the aqueous inkjet ink for lamination of the present invention.

### <Alkali-soluble or self-emulsifying aqueous polyurethane resin>

The aqueous inkjet ink composition for lamination of the present invention contains an alkali-soluble or self-emulsifying aqueous polyurethane resin satisfying the following condition 1: the alkali-soluble or self-emulsifying aqueous polyurethane resin is a reaction product of reaction components including hexamethylene diisocyanate, at least one selected from the group of polyester diol compounds represented by the following formula 1, and an acid group-containing diol compound. 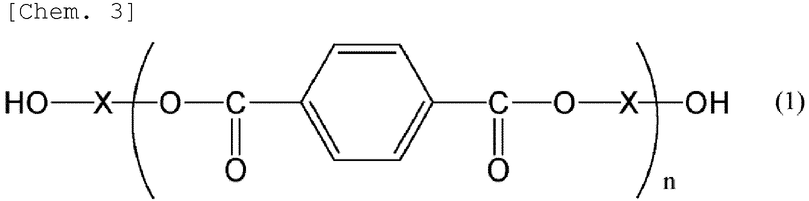 (In the formula, Xs are each independently a hydrocarbon group represented by -CH₂-CH₂-CH₂-CH₂-CH₂-CH₂- or -CH₂-CH₂-CH(CH₃)-CH₂-CH₂-, and n is an integer of 2 to 20.)

The aqueous inkjet ink composition for lamination of the present invention contains an alkali-soluble or self-emulsifying aqueous polyurethane resin satisfying the condition 1, and thus has excellent storage stability and ejection stability as well as excellent applicability (printed image quality) to various films. Moreover, for example, the aqueous inkjet ink composition used in combination with a primer composition containing a material such as chlorinated polypropylene can have excellent laminate strength to various base films.

This is presumably because the alkali-soluble or self-emulsifying aqueous polyurethane resin satisfying the condition 1 has the following features. (1) The alkali-soluble or self-emulsifying aqueous polyurethane resin has excellent dissolution stability or self-emulsification stability in the aqueous medium. (2) When forming the later-described coating layer containing a primer composition and then printing the aqueous inkjet ink composition for lamination of the present invention, the coating layer containing a primer composition is presumably dissolved by a component in the ink composition that dissolves the coating layer, and mixed with the printed layer containing the ink composition, forming one integrated layer. As a result, the adsorption sites to the base film contained in both the coating layer and the printed layer (particularly the chlorinated polypropylene contained in the primer composition and an adsorption site in the molecule of the alkali-soluble or self-emulsifying aqueous polyurethane resin satisfying the condition 1) presumably contribute to the adhesion to the base film. (3) The alkali-soluble or self-emulsifying aqueous polyurethane resin has higher flexibility than resins used in conventional ink compositions, allowing the printed layer containing the aqueous inkjet ink composition for lamination of the present invention to follow the change of the shape of the base film.

The polyester diol compounds represented by the formula 1 can be obtained by, for example, condensation polymerization of hexamethylene diol and/or 3-methyl-1,5-pentylene glycol as diol component(s) and a phthalic acid as a dicarboxylic acid component.

Examples of the acid group-containing diol compound include carboxy group-containing diol compounds represented by the following formula 2. 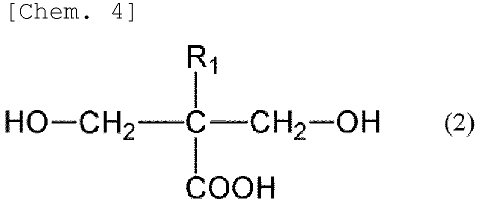 (wherein R₁ is a hydrogen atom or a C1-C8 linear or branched alkyl group.)

Examples of the acid group-containing diol compound include: carboxy group-containing aliphatic polyols obtained by reacting succinic acid, adipic acid, or the like with a lower polyol such that two hydroxy groups and one or more carboxy groups remain in the molecule; and carboxy group-containing aromatic polyols obtained by reacting phthalic acid, trimellitic acid, pyromellitic acid, or anhydride of any of them with a lower polyol such that two hydroxy groups and one or more carboxy groups remain in the molecule.

The alkali-soluble or self-emulsifying aqueous polyurethane resin satisfying the condition 1 may be a reaction product of only the hexamethylene diisocyanate, the at least one selected from the group of polyester diol compounds represented by the formula 1, and the acid group-containing diol compound; however, if necessary, a component such as a chain extender or a reaction terminator may be used as a reaction component.

Examples of chain extenders that can be used include: glycols such as ethylene glycol, propylene glycol, 1,4-butanediol, 1,6-hexanediol, and diethylene glycol; low molecular weight aliphatic and alicyclic diamines such as ethylenediamine, 1,4-butanediamine, 1,6-hexanediamine, aminoethylethanolamine, and isophoronediamine; hydrazines such as hydrazine, alkyldihydrazine, and alkyldihydrazide.

Examples of reaction terminators that can be used include: alkylamines such as n-propylamine, n-butylamine, and N,N-di-n-butylamine; alkanolamines such as monoethanolamine and diethanolamine; hydrazines such as hydrazine, alkyldihydrazine, and alkyldihydrazide; and monoalcohols such as methanol and ethanol.

The reaction components for the alkali-soluble or self-emulsifying aqueous polyurethane resin satisfying the condition 1 may be used alone, or in combination of two or more thereof. The aqueous inkjet ink composition for lamination of the present invention may contain only one polyurethane resin synthesized from the above reaction components, or two or more polyurethane resins synthesized from different reaction components.

The polyurethane resin may be synthesized using the above reaction components by a usual method.

For example, when the reaction components are only hexamethylene diisocyanate, a polyester diol compound represented by the formula 1, and an acid group-containing diol compound, the polyurethane resin may be produced by a method in which all these three component are reacted at once, or a method in which the hexamethylene diisocyanate and the polyester diol compound represented by the formula 1 are reacted under conditions where isocyanate groups are in excess and then the acid group-containing diol compound is reacted.

When the reaction components further include a chain extender and a reaction terminator, the polyurethane resin may be produced by a method in which the hexamethylene diisocyanate and the polyester diol compound represented by the formula 1 are reacted under conditions where isocyanate groups are in excess to synthesize a urethane prepolymer, subsequently the urethane prepolymer is further reacted with the acid group-containing diol compound and the chain extender under conditions where isocyanate groups are in excess, and then the reaction terminator is reacted, or a method in which all the acid group-containing diol compound, chain extender, and reaction terminator are reacted at once.

The alkali-soluble or self-emulsifying aqueous polyurethane resin satisfying the condition 1 preferably has a molecular weight in terms of a weight average molecular weight (hereinafter the molecular weight of the polyurethane resin refers to a weight average molecular weight unless otherwise specified) in the range of 2,000 to 100,000, more preferably 3,000 to 50,000, still more preferably 5,000 to 30,000.

When the alkali-soluble or self-emulsifying aqueous polyurethane resin satisfying the condition 1 has a molecular weight of less than 2,000, the ink film may be fragile. When the molecular weight is more than 100,000, even a small amount of the alkali-soluble or self-emulsifying aqueous polyurethane resin tends to cause the aqueous inkjet ink composition for lamination to have high viscosity, which may interfere with ink film formation.

The alkali-soluble or self-emulsifying aqueous polyurethane resin satisfying the condition 1 preferably has an acid value of 5 to 100 mg KOH/g. When the acid value of the alkali-soluble or self-emulsifying aqueous polyurethane resin satisfying the condition 1 is less than 5 mg KOH/g, the dispersibility of the polyurethane resin in the aqueous medium described later may be reduced. When the acid value is more than 100 mg KOH/g, the drying characteristics during printing or the water resistance of the resulting printed product may be reduced.

The alkali-soluble or self-emulsifying aqueous polyurethane resin satisfying the condition 1 more preferably has an acid value of 5 to 50 mg KOH/g so as to suitably impart laminate strength (peel strength between the base film and the sealant film).

Here, as the acid value of the alkali-soluble or self-emulsifying aqueous polyurethane resin satisfying the condition 1 is lowered, the polyurethane resin changes from an alkali-soluble aqueous polyurethane resin into a self-emulsifying aqueous polyurethane resin.

In order to maintain low viscosity of the aqueous inkjet ink composition for lamination of the present invention, the alkali-soluble or self-emulsifying aqueous polyurethane resin is preferably a self-emulsifying aqueous polyurethane resin.

The self-emulsifying aqueous polyurethane resin refers to a polyurethane resin having an ionic group in the molecule and capable of stably being dispersed in an aqueous medium owing to the ionization of the ionic group.

Preferably, the alkali-soluble or self-emulsifying aqueous polyurethane resin satisfying the condition 1 is dissolved or emulsified in water in the presence of a basic compound and used as an aqueous resin varnish.

The alkali-soluble or self-emulsifying aqueous polyurethane resin satisfying the condition 1 may be dissolved or emulsified in the aqueous medium described later by the following method, for example. First, a basic compound in a substantially neutralizing amount for the alkali-soluble or self-emulsifying aqueous polyurethane resin satisfying the condition 1 is dissolved in the aqueous medium described later. Then, the alkali-soluble or self-emulsifying aqueous polyurethane resin satisfying the condition 1 is added, followed by stirring with a high-speed stirrer.

The basic compound used is not limited, and may be a commonly used basic compound. Examples thereof include: alkylamines such as butylamine and triethylamine; alkanolamines such as monoethanolamine, diethanolamine, and triethanolamine; morpholine; aqueous ammonia; and sodium hydroxide. The amount of the basic compound added is appropriately determined according to the amount, physical properties, and the like of the polyurethane resin used. The basic compounds may be used alone or in combination of two or more thereof.

The amount of the alkali-soluble or self-emulsifying aqueous polyurethane resin satisfying the condition 1 is appropriately adjusted according to viscosity behavior in the later-described aqueous medium used, components used in combination, desired ink physical properties, and the like. The amount of the alkali-soluble or self-emulsifying aqueous polyurethane resin is preferably 1.0 to 10.0% by mass relative to the total mass of the aqueous inkjet ink composition for lamination of the present invention. The amount of the alkali-soluble or self-emulsifying aqueous polyurethane resin is more preferably 3 to 8% by mass relative to the total mass of the aqueous inkjet ink composition for lamination of the present invention, so as to impart storage stability and ejection stability to the aqueous inkjet ink composition for lamination of the present invention and impart laminate strength (peel strength between the base film and the sealant film).

### <Aqueous medium>

The aqueous inkjet ink composition for lamination of the present invention contains an aqueous medium.

The aqueous medium used preferably contains water and an optional component such as a water-miscible organic solvent.

The water-miscible organic solvent is added depending on the solubility of the alkali-soluble or self-emulsifying aqueous polyurethane resin satisfying the condition 1 and also desired properties such as drying characteristics, moisture retention, or leveling properties during printing. Any water-miscible organic solvent may be used as long as it does not interfere with the effects of the present invention or damage inkjet printers. Suitable water-miscible organic solvents include monoalcohols, mono- and poly-alkylene glycols and alkyl ether compounds thereof, and mono- and polyglycerins and adducts of ethylene oxide therewith.

Specific examples of the monoalcohols include methanol, ethanol, n-propanol, n-butanol, n-petanol, n-hexanol, n-heptanol, n-octabol, n-nonyl alcohol, n-decanol, isomers of these, cyclopetanol, and cyclohexanol. Preferred are alcohols having a C1-C6 alkyl group.

Specific examples of the mono- and poly-alkylene glycols include ethylene glycol, propylene glycol, 1,3-butylene glycol, 1,4-butylene glycol, 1,2-pentanediol, 1,5-pentanediol, neopentyl glycol, 1,2-hexanediol, 1,6-hexanediol, 1,2-cyclohexanediol, heptanediol, 1,8-octanediol, 1,9-nonanediol, 1,10-decanediol, glycerin, pentaerythritol, diethylene glycol, dipropylene glycol, triethylene glycol, tetraethylene glycol, polyethylene glycol, polypropylene glycol, and thiodiglycol.

Examples of the alkyl ether compounds of mono- and poly-alkylene glycols include ethylene glycol monomethyl ether, ethylene glycol dimethyl ether, ethylene glycol monoethyl ether, ethylene glycol diethyl ether, ethylene glycol monopropyl ether, ethylene glycol isopropyl ether, ethylene glycol monobutyl ether, ethylene glycol isobutyl ether, propylene glycol monomethyl ether, propylene glycol monoethyl ether, propylene glycol monopropyl ether, propylene glycol monobutyl ether, diethylene glycol monomethyl ether, diethylene glycol monoethyl ether, dipropylene glycol mono-n-propyl ether, and dipropylene glycol mono-n-butyl ether.

For the aqueous medium, the mixing ratio between the water and the water-miscible organic solvent may also be determined according to the characteristics of the target aqueous inkjet ink composition for lamination. The amount of the water-miscible organic solvent in an aqueous medium is usually preferably 2 to 30% by weight.

### <Other components>

The aqueous inkjet ink composition for lamination of the present invention may further contain any component depending on the intended purpose. Examples thereof include known additives such as pigment dispersants, surfactants, fungicides, corrosion inhibitors, thickeners, antioxidants, ultraviolet absorbers, preservability improvers, defoamers, and pH adjusters.

### <Method for producing the aqueous inkjet ink composition for lamination of the present invention>

The aqueous inkjet ink composition for lamination of the present invention may be suitably produced by any of the following methods, for example.
(1) The following materials are mixed: a pigment, an optional pigment-dispersing component (e.g., a low molecular weight pigment-dispersing component or an aqueous resin varnish containing a high molecular weight pigment-dispersing component dissolved in an aqueous medium), an aqueous resin varnish prepared by dissolution or self-emulsification of an alkali-soluble or self-emulsifying aqueous polyurethane resin satisfying the condition 1 in an aqueous medium, and other component(s). Next, the pigment is dispersed using a disperser such as a ball mill, an attritor, a roll mill, a sand mill, or an agitator mill. Then, the remaining material(s) (e.g., the aqueous resin varnish prepared by dissolution or self-emulsification of the alkali-soluble or self-emulsifying aqueous polyurethane resin satisfying the condition 1 in an aqueous medium, or an aqueous medium) are/is optionally added, whereby an aqueous inkjet ink composition for lamination is prepared.
(2) A pigment is dispersed as in the method (1) using the aqueous resin varnish containing a high molecular weight pigment-dispersing component dissolved in an aqueous medium. Subsequently, the high molecular weight pigment-dispersing component is precipitated on the pigment surface by an acid precipitation method or an ion exchange means disclosed in WO 2005/116147 A1, for example, whereby a resin coated pigment is obtained. The obtained resin coated pigment is neutralized with a basic compound and redispersed in an aqueous medium with a disperser (e.g., high-speed stirrer). The remaining material(s) are/is then added, whereby an aqueous inkjet ink composition for lamination is prepared.
(3) The following materials are mixed with a disperser (e.g., high-speed stirrer), whereby an aqueous inkjet ink composition for lamination is prepared: a dye, an aqueous resin varnish prepared by dissolution or self-emulsification of the alkali-soluble or self-emulsifying aqueous polyurethane resin satisfying the condition 1 in an aqueous medium, an aqueous medium, and optional other component(s).

In particular, when the colorant used is a pigment, the production method (2) is preferred because it allows the aqueous inkjet ink composition for lamination to have better storage stability.

The aqueous inkjet ink composition for lamination of the present invention obtained as above preferably has an initial viscosity after production of 2.0 to 20.0 mPa·s, more preferably 3.0 to 10.0 mPa·s.

### <Primer composition>

Before the aqueous inkjet ink composition for lamination of the present invention is printed on a base film, a coating layer is preferably formed on a surface of the base film by applying a primer composition so as to impart good printability and adhesion.

Examples of suitable primer compositions include the following primer composition 1 and the following primer composition 2.

The primer composition 1 contains a water-soluble polyvalent metal salt, a chlorinated polyolefin emulsion, at least one selected from the group consisting of an acrylic emulsion and a vinyl acetate emulsion, and water.

The primer composition 2 contains a water-soluble polyvalent metal salt, a hydrazine derivative containing at least two hydrazine residues, at least one selected from the group consisting of an acrylic emulsion and a vinyl acetate emulsion, and water.

Examples of the water-soluble polyvalent metal salt include dissociable salts of alkaline earth metals such as Ca and Mg. Specific examples thereof include: calcium salts such as calcium nitrate, calcium chloride, calcium hydroxide, calcium acetate, and calcium formate; magnesium salts such as magnesium chloride, magnesium hydroxide, magnesium acetate, and magnesium sulfate. Preferred among these are calcium salts, and more preferred are, for example, calcium nitrate, calcium chloride, calcium hydroxide, calcium acetate, and calcium formate.

The amount of the water-soluble polyvalent metal salt is not limited. In order to obtain a clear, smear-less printed product with good water resistance, the amount of the water-soluble polyvalent metal salt in terms of solid content is preferably 0.5 to 10% by mass, more preferably 1 to 5% by mass in the primer composition. Two or more water-soluble polyvalent metal salts may be used in combination.

The chlorinated polyolefin emulsion is obtained by chlorinating a polyolefin resin and emulsifying the resulting chlorinated polyolefin resin with an emulsifier or the like. To enhance properties such as storage stability of the aqueous resin emulsion, the chlorinated polyolefin may be acid-modified with an acid such as maleic acid (anhydride). In this case, a basic compound is further added to the system.

Examples of the polyolefin resin include polypropylene resins and polyethylene resins. The degree of chlorination (chlorine content) is preferably 1 to 40% by mass, more preferably 10 to 30% by mass relative to the entire resin.

A polyolefin resin having a degree of chlorination of higher than 40% by weight may itself have high polarity, and thus may tend to reduce adhesion to non-polar films such as polyolefin films when added to a primer composition.

Two or more of these chlorinated polyolefin emulsions may be used in combination.

The amount of the chlorinated polyolefin emulsion is not limited. In order to achieve good ink adhesion to polyolefin films and good storage stability of the primer composition itself, the amount of the chlorinated polyolefin emulsion in terms of solid content is preferably 0.5 to 10% by mass, more preferably 1 to 5% by mass in the primer composition.

The chlorinated polyolefin emulsion preferably has good stability even in the presence of the water-soluble polyvalent metal salt.

Examples of the hydrazine derivative containing at least two hydrazine residues include compounds represented by the following formula 3, compounds represented by the following formula 4, maleic dihydrazide, fumaric dihydrazide, and itaconic dihydrazide. More preferred among these are adipic dihydrazide, sebacic dihydrazide, and isophthalic dihydrazide. Two or more of these hydrazine derivatives may be used in combination. 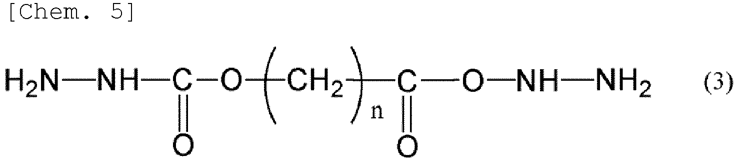 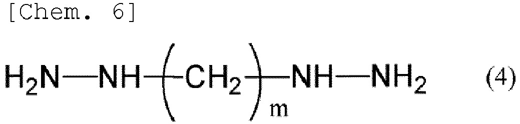 (wherein n is an integer of 1 to 10 and m is an integer of 1 to 4.)

The amount of the hydrazine derivative is not limited. From the standpoint of improving ink adhesion to plastic films and the standpoint of storage stability of the primer composition, the amount of the hydrazine derivative is preferably 0.5 to 10% by mass, more preferably 1 to 5% by mass in the primer composition.

Examples of the at least one selected from the group consisting of an acrylic emulsion and a vinyl acetate emulsion include those obtained by emulsifying an acrylic copolymer, a styrene-acrylic copolymer, an acrylic-vinyl acetate copolymer, or an acrylic-vinyl chloride copolymer using a basic compound or an emulsifier. Examples of vinyl acetate emulsions that can be used include those obtained by emulsifying, for example, a vinyl acetate-vinyl alcohol copolymer obtained by partially saponifying vinyl acetate, a vinyl chloride-vinyl acetate copolymer, or an α-olefin-vinyl acetate copolymer using an emulsifier or the like. These acrylic emulsions and vinyl acetate emulsions more preferably have a glass transition temperature of 0°C to 50°C because such emulsions allow the primer composition itself and the ink to have good adhesion to plastic films.

The amount of the at least one selected from the group consisting of an acrylic emulsion and a vinyl acetate emulsion is not limited. From the standpoint of the adhesion of the primer composition itself to polyester films or nylon films and the storage stability of the primer composition itself, the amount of the at least one selected from the group consisting of an acrylic emulsion and a vinyl acetate emulsion in terms of solid content is preferably 0.5 to 10% by mass, more preferably 1 to 5% by mass in the primer composition.

These acrylic emulsions or vinyl acetate emulsions preferably have good stability even in the presence of the water-soluble polyvalent metal salt.

The primer composition may contain optional components(s), if necessary. Examples of optional components include water-soluble organic solvents such as monoalcohols, polyalcohols, lower alkyl ethers of polyalcohols, ketones, ethers, esters, and nitrogen-containing compounds; and various additives such as acetylene diol and derivatives thereof, silicone surfactants, fluorine surfactants, hindered amine preservability improvers, ultraviolet absorbers, antioxidants and defoamers.

The primer composition may be produced by any method. It may be produced by a method including adding, to water, the water-soluble polyvalent metal salt, the chlorinated polyolefin emulsion (hydrazine derivative containing at least two hydrazine residues), and the at least one selected from an acrylic emulsion and a vinyl acetate emulsion, and optionally a water-soluble organic solvent and various additives, and stirring and mixing them with a high-speed stirrer such as a disperser.

### <Printed product>

The following describes a printed product obtained by printing the aqueous inkjet ink composition for lamination of the present invention on a base film, and a method for using the printed product.

A printed product can be suitably obtained by printing the aqueous inkjet ink composition for lamination of the present invention on a plastic film by the following method: The primer composition is first applied to a surface of a base film to form a coating layer, and then the aqueous inkjet ink composition for lamination of the present invention is printed with an inkjet printer to form a printed layer.

One aspect of the present invention provides such a printed product including a base film, a coating layer containing a primer composition, and a printed layer containing the aqueous inkjet ink composition for lamination of the present invention, the base film, the coating layer, and the printed layer being laminated in the stated order, wherein the primer composition satisfies the following condition 2.

### Condition 2

The primer composition contains a water-soluble polyvalent metal salt, a chlorinated polyolefin emulsion, at least one selected from the group consisting of an acrylic emulsion and a vinyl acetate emulsion, and water, or contains a water-soluble polyvalent metal salt, a hydrazine derivative containing at least two hydrazine residues, at least one selected from the group consisting of an acrylic emulsion and a vinyl acetate emulsion, and water.

The base film is formed of a material such as a thermoplastic resin capable of forming a clear film. Examples of major materials used in the field of food packaging containers include polyethylene, polypropylene, ethylene-vinyl acetate copolymers, polyethylene terephthalate, polybutylene terephthalate, nylon-6, nylon-6,6, polyvinyl chloride, and polyvinylidene chloride.

The base film is preferably uniaxially or biaxially oriented. The surface to which the primer composition is to be applied is preferably subjected to treatment such as plasma treatment or corona discharge treatment so as to increase the adhesion to the primer composition and the wettability.

The primer composition may be applied by an application method using an inkjet printer or any of other various application devices such as a roll coater, a bar coater, a spray coater, or a gravure coater. The aqueous inkjet ink composition for lamination of the present invention is printed using an inkjet printer. The aqueous inkjet ink composition for lamination of the present invention is used in fields in which lamination is performed. In many cases, after printing a design with ink compositions of yellow, red, blue, black, and other colors, white backing is performed on the entire surface with a white ink.

The printed product of the present invention is further subjected to lamination. For example, in the simplest lamination, a hot-melt sealant film is laminated, using the adhesive for lamination, on the surface having the printed layer containing the aqueous inkjet ink composition for lamination of the present invention, whereby a laminated product is produced.

One aspect of the present invention provides such a laminated product including the printed product of the present invention and a sealant film laminated on a surface of the printed product, the surface being opposite to a surface having the coating layer thereon.

The adhesive for lamination may be appropriately selected from those conventionally used in lamination. Examples thereof include urethane resin adhesives, imino group-containing resin adhesives, and butadiene resin adhesives. Preferred among these are urethane resin adhesives. Urethane resin adhesives that can be used include: two-component adhesives containing a combination of a polyol component and an isocyanate group-terminated urethane prepolymer containing a polyol component and an excess aliphatic polyisocyanate component; and two-component adhesives containing a combination of a polyisocyanate component and a hydroxy group-terminated urethane prepolymer containing an excess polyol component and an aliphatic polyisocyanate component. The adhesive for lamination may optionally contain an epoxy compound and/or a silane coupling agent.

Examples of the material of the sealant film include non-oriented polyethylene, linear low density polyethylene, non-oriented polypropylene, and ethylene-vinyl acetate copolymers.

The application of the adhesive for lamination and laminating of the sealant film may be performed using a known dry lamination device equipped with an application device such as a roll coater, a bar coater or a gravure coater.

In lamination, one or more functional layers may be formed between the printed layer containing the aqueous inkjet ink composition for lamination of the present invention and the sealant film so as to improve gas barrier properties and enhance strength. Examples of functional layers include: deposited silica film layers and deposited alumina film layers for improvement of gas barrier properties; and oriented nylon film layers for enhancing strength. The functional layers may be disposed using the adhesive for lamination.

The laminated product of the present invention preferably has a laminate strength (peel strength between the base film and the sealant film) of 50 g/15 mm or more, more preferably 100 g/15 mm or more.

The laminate strength is a value of peel strength (dry laminate strength) measured by cutting the laminated product after standing at 40°C for three days to a width of 15 mm to prepare a specimen and performing T-peeling using a peel tester (Yasuda Seiki Seisakusho, Ltd.).

One aspect of the present invention provides a laminating method including forming a coating layer by applying a primer composition to one surface of a base film, subsequently forming a printed layer by printing the aqueous inkjet ink composition for lamination of the present invention on a surface of the coating layer by inkjet printing, subsequently applying an adhesive for lamination to a surface of the printed layer, and then laminating a sealant film.

The laminated product obtained by the above method may be formed into a bag by a method including folding the laminated product in the middle such that the sealant film side is on the inside of the container, or laminating a plurality of the composite films, and then hot-melting and pressure-bonding the ends using a heat sealer or the like. The laminated product may be used for packaging containers of various heat sealing modes, such as three-side sealing, four-side sealing, lap sealing, fin sealing, and gusset sealing.

### EXAMPLES

The present invention is more specifically described hereinbelow referring to, but not limited to, examples. The "part(s)" and "%" in examples and comparative examples are on the mass basis unless otherwise specified.

### <Preparation of aqueous polyurethane resin varnish A>

A pressure polymerization vessel equipped with a thermometer and a stirrer was charged with 200.0 parts of a polyester diol obtained by dehydration copolymerization of 1,6-hexanediol and phthalic acid and having a weight average molecular weight of 2,000, 5.4 parts of dimethylolpropionic acid, 21.9 parts of hexamethylene diisocyanate, and 265.5 parts of methyl ethyl ketone. They were reacted at 75°C for seven hours. Thereafter, 3.9 parts of triethylamine and 539.5 parts of pure water were added and the methyl ethyl ketone was distilled under reduced pressure, whereby an aqueous polyurethane resin varnish A (U-A) was obtained. The aqueous polyurethane resin varnish A (U-A) contained, as a solid content, 30% of a self-emulsifying polyurethane resin having a weight average molecular weight of 24,000 and a theoretical acid value of 9.9 mg KOH/g.

### <Preparation of aqueous polyurethane resin varnish B>

A pressure polymerization vessel equipped with a thermometer and a stirrer was charged with 200.0 parts of a polyester diol obtained by dehydration copolymerization of 3-methyl-1,5-pentanediol and phthalic acid and having a weight average molecular weight of 2,000, 5.4 parts of dimethylolpropionic acid, 21.9 parts of hexamethylene diisocyanate, and 265.5 parts of methyl ethyl ketone. They were reacted at 75°C for seven hours. Thereafter, 3.9 parts of triethylamine and 539.5 parts of pure water were added and the methyl ethyl ketone was distilled under reduced pressure, whereby an aqueous polyurethane resin varnish B (U-B) was obtained. The aqueous polyurethane resin varnish B (U-B) contained, as a solid content, 30% of a self-emulsifying polyurethane resin having a weight average molecular weight of 24,000 and a theoretical acid value of 9.9 mg KOH/g.

### <Preparation of aqueous polyurethane resin varnish C>

A pressure polymerization vessel equipped with a thermometer and a stirrer was charged with 200.0 parts of a polyester diol that was obtained by dehydration copolymerization of a diol component having a mass ratio of 1,6-hexanediol to 3-methyl-1,5-pentanediol of 1:1 and phthalic acid and had a weight average molecular weight of 2,000, 5.4 parts of dimethylolpropionic acid, 21.9 parts of hexamethylene diisocyanate, and 265.5 parts of methyl ethyl ketone. They were reacted at 75°C for seven hours. Thereafter, 3.9 parts of triethylamine and 539.5 parts of pure water were added and the methyl ethyl ketone was distilled under reduced pressure, whereby an aqueous polyurethane resin varnish C (U-C) was obtained. The aqueous polyurethane resin varnish C (U-C) contained, as a solid content, 30% of a self-emulsifying polyurethane resin having a weight average molecular weight of 25,000 and a theoretical acid value of 9.9 mg KOH/g.

### <Preparation of aqueous polyurethane resin varnish D>

A pressure polymerization vessel equipped with a thermometer and a stirrer was charged with 200.0 parts of a polyester diol obtained by dehydration copolymerization of 1,6-hexanediol and phthalic acid and having a weight average molecular weight of 2,000, 5.4 parts of dimethylolpropionic acid, 22.7 parts of hexamethylene diisocyanate, and 265.5 parts of methyl ethyl ketone. They were reacted at 75°C for seven hours. Thereafter, 3.9 parts of triethylamine and 541.4 parts of pure water were added and the methyl ethyl ketone was distilled under reduced pressure, whereby an aqueous polyurethane resin varnish D (U-D) was obtained. The aqueous polyurethane resin varnish D (U-D) contained, as a solid content, 30% of a self-emulsifying polyurethane resin having a weight average molecular weight of 47,000 and a theoretical acid value of 10.0 mg KOH/g.

### <Preparation of aqueous polyurethane resin varnish E>

A pressure polymerization vessel equipped with a thermometer and a stirrer was charged with 200.0 parts of a polyester diol obtained by dehydration copolymerization of 1,6-hexanediol and phthalic acid and having a weight average molecular weight of 2,000, 2.7 parts of dimethylolpropionic acid, 18.5 parts of hexamethylene diisocyanate, and 265.5 parts of methyl ethyl ketone. They were reacted at 75°C for seven hours. Thereafter, 3.6 parts of triethylamine and 516.4 parts of pure water were added and the methyl ethyl ketone was distilled under reduced pressure, whereby an aqueous polyurethane resin varnish E (U-E) was obtained. The aqueous polyurethane resin varnish E (U-E) contained, as a solid content, 30% of a self-emulsifying polyurethane resin having a weight average molecular weight of 23,000 and a theoretical acid value of 5.1 mg KOH/g.

### <Preparation of aqueous polyurethane resin varnish F>

A pressure polymerization vessel equipped with a thermometer and a stirrer was charged with 200.0 parts of a polyester diol obtained by dehydration copolymerization of 1,6-hexanediol and phthalic acid and having a weight average molecular weight of 1,000, 67.2 parts of hexamethylene diisocyanate, and 350.0 parts of methyl ethyl ketone. They were reacted at 75°C for seven hours. Then, 62.8 parts of a diol dicarboxylic acid compound obtained by reacting pyromellitic anhydride and ethylene glycol at 1:2 and 1.5 parts of ethanol were added, and the reaction was performed for additional three hours. Thereafter, 37.1 parts of triethylamine and 516.4 parts of pure water were added and the methyl ethyl ketone was distilled under reduced pressure, whereby an aqueous polyurethane resin varnish F (U-F) was obtained. The aqueous polyurethane resin varnish F (U-F) contained, as a solid content, 30% of a self-emulsifying polyurethane resin having a weight average molecular weight of 22,000 and a theoretical acid value of 55.8 mg KOH/g.

### <Preparation of aqueous polyurethane resin varnish G>

A pressure polymerization vessel equipped with a thermometer and a stirrer was charged with 200.0 parts of a polyester diol obtained by dehydration copolymerization of 1,6-hexanediol and phthalic acid and having a weight average molecular weight of 2,000, 5.4 parts of dimethylolpropionic acid, 28.9 parts of isophorone diisocyanate, and 265.5 parts of methyl ethyl ketone. They were reacted at 75°C for seven hours. Thereafter, 3.9 parts of triethylamine and 555.8 parts of pure water were added and the methyl ethyl ketone was distilled under reduced pressure, whereby an aqueous polyurethane resin varnish G (U-G) was obtained. The aqueous polyurethane resin varnish G (U-G) contained, as a solid content, 30% of a self-emulsifying polyurethane resin having a weight average molecular weight of 25,000 and a theoretical acid value of 9.6 mg KOH/g.

### <Aqueous polyurethane resin varnish H>

NeoRez R-966 (produced by Kusumoto Chemicals, Ltd., polyether polyurethane resin, solid content 33% by mass) was used as an aqueous polyurethane resin varnish H (U-H).

### <Aqueous polyurethane resin varnish I>

SUPERFLEX 420NS (produced by DKS Co. Ltd., polycarbonate polyurethane resin, solid content 32% by mass) was used as an aqueous polyurethane resin varnish I (U-I).

### <Aqueous acrylic resin varnish>

VINYBLAN 2687 (produced by Nissin Chemical Co., Ltd., acrylic resin emulsion, solid content 30% by mass) was used as an aqueous acrylic resin varnish.

The weight average molecular weight was determined as a polystyrene-equivalent weight average molecular weight by chromatography using Water 2690 (produced by Waters Corporation) as a GPC device and PLgel 5 µ MIXED-D (produced by Polymer Laboratories) as a column.

The theoretical acid value means the number of milligrams of potassium hydroxide theoretically needed to neutralize 1 g of the polyurethane resin, arithmetically determined based on factors such as the molecular weight of the carboxy group-containing compound used as a synthesis component of the polyurethane resin, the mixing ratio of the compound, and the number of carboxy groups in the molecule of the compound.

### <Preparation of aqueous resin varnish A for pigment dispersion>

An amount of 2.5 parts of potassium hydroxide was dissolved in 77.5 parts of pure water, and in the solution was dissolved, under heat, 20 parts of an acrylic acid/n-butyl acrylate/benzyl methacrylate/styrene copolymer having a glass transition temperature of 40°C, a weight average molecular weight of 30,000, and an acid value of 185 mg KOH/g. Thus, an aqueous resin varnish A for pigment dispersion having a solid content of 20% was obtained.

### <Preparation of aqueous black ink base>

An amount of 23.7 parts of the aqueous resin varnish A for pigment dispersion, 64.3 parts of pure water, and 12.0 parts of carbon black (Printex 90, produced by Degussa) were stirred and mixed, and then kneaded in a wet-type circulation mill, whereby an aqueous black ink base (BASE-B) was obtained.

### <Preparation of aqueous yellow ink base>

An amount of 23.7 parts of the aqueous resin varnish A for pigment dispersion, 64.3 parts of pure water, and 12.0 parts of a yellow pigment (Novoperm Yellow 4G 01, produced by Clariant) were stirred and mixed, and then kneaded in a wet-type circulation mill, whereby an aqueous yellow ink base (BASE-Y) was obtained.

### <Preparation of aqueous magenta ink base>

An amount of 23.7 parts of the aqueous resin varnish A for pigment dispersion, 64.3 parts of pure water, and 12 parts of a magenta pigment (Ink Jet Magenta E5B 02, produced by Clariant) were stirred and mixed, and then kneaded in a wet-type circulation mill, whereby an aqueous magenta ink base (BASE-M) was obtained.

### <Preparation of aqueous cyan ink base>

An amount of 23.7 parts of the aqueous resin varnish A for pigment dispersion, 64.3 parts of pure water, and 12.0 parts of a cyan pigment (Heliogen Blue L 7101 F, available from BASF) were stirred and mixed, and then kneaded in a wet-type circulation mill, whereby an aqueous cyan ink base (BASE-C) was obtained.

### <Preparation of aqueous white ink base>

An amount of 40.0 parts of the aqueous resin varnish A for pigment dispersion, 20.0 parts of pure water, and 40.0 of titanium oxide (R-960, produced by Du Pont) were stirred and mixed, and then kneaded in a wet-type circulation mill, whereby an aqueous white ink base (BASE-W) was obtained.

### <Surfactant>

SURFYNOL 440 (produced by Air Products and Chemicals)

### <Preparation of aqueous inkjet ink composition for lamination>

Aqueous inkjet ink compositions for lamination (Examples 1 to 12 and Comparative Examples 1 to 5) were prepared according to the formulations shown in Table 1 using the aqueous polyurethane resin dispersions and ink bases obtained by the above methods.

### <Preparation of primer composition A>

A primer composition A was prepared by stirring and mixing 2 parts of calcium acetate, 6.7 parts of a chlorinated polyolefin resin emulsion (SUPERCHLON E-604, degree of chlorination 21%, solid content 30%, produced by Nippon Paper Industries Co., Ltd.), 16.7 parts of an acrylic emulsion (VINYBLAN 2687, solid content 30% by mass, produced by Nissin Chemical Co., Ltd.), and 74.6 parts of water in a high-speed stirrer.

### <Evaluation of aqueous inkjet ink composition for lamination>

### (Storage stability test)

First, 50 mL of each of the aqueous inkjet ink compositions for lamination of Examples 1 to 12 and Comparative Examples 1 to 5 immediately after preparation was sampled in a glass jar, and the viscosity at 25°C was measured using a viscometer (produced by Toki Sangyo Co., Ltd., RE100L model). The glass jars were then tightly sealed, and stored at 60°C for one month. Thereafter, the viscosity at 25°C was measured again using a viscometer. The storage stability was evaluated from the following ratio: the viscosity of the ink composition after storage at 60°C for one month/the viscosity of the ink composition immediately after preparation.

### (Evaluation criteria)

Good: The viscosity change was less than 5 %.
Fair: The viscosity change was 5% or more but less than 10%.
Poor: The viscosity change was 10% or more.

### (Ejection stability)

The aqueous inkjet ink compositions for lamination of Examples 1 to 12 and Comparative Examples 1 to 5 were printed on photo paper (GL-101A450, produced by Canon Inc.) using a printer PX105 produced by Seiko Epson Corporation, and the ejection stability was evaluated.

### (Evaluation criteria)

Good: No printing disturbance occurred, and the ink composition was stably ejected.
Fair: Slight printing disturbance occurred, but the ink composition was ejected.
Poor: Printing disturbance occurred and the ink composition was not stably ejected.

### (Printed image quality)

The primer composition A was applied to an OPP film using a 0.1-mm bar coater. Each of the aqueous inkjet ink compositions for lamination of Examples 1 to 12 and Comparative Examples 1 to 5 was printed on the film in a thin line having a width of about 0.3 mm with a printer PX105 produced by Seiko Epson Corporation. The printed line was visually observed for thickening due to spreading of the ink composition, and the printed image quality was evaluated.

### (Evaluation criteria)

Good: No spreading was observed, and the thin line was printed with the original thickness.
Fair: The thin line was partially thickened to less than twice the original thickness.
Poor: The entire line was thickened to twice or more the original thickness.

### (Dry laminate strength)

A biaxially oriented polyethylene terephthalate (PET) film whose one side was corona discharge-treated (produced by Toyobo Co., Ltd., E-5102, thickness 12 µm) and a biaxially oriented polypropylene (OPP) film whose one side was corona discharge-treated (produced by Toyobo Co., Ltd., PYLEN P-2161, thickness 25 µm) were provided. The primer composition A was applied to the treated side of the each film, and each of the aqueous inkjet ink compositions for lamination of Examples 1 to 12 and Comparative Examples 1 to 5 was printed thereon using a printer PX105 produced by Seiko Epson Corporation. Thereafter, an isocyanate adhesive (produced by Takeda Pharmaceutical Company Limited, TAKELAC A-385/TAKENATE A-50 ethyl acetate solution) was applied, and a non-oriented polypropylene film was laminated using a dry laminator, whereby laminated products were obtained. Each laminated product was left to stand at 40°C for three days and cut to a width of 15 mm to prepare a specimen. The peel strength (dry laminate strength) was measured by T-peeling using a peel tester (produced by Yasuda Seiki Seisakusho, Ltd.)

### (Evaluation criteria)

Good: The peel strength was 100 g/15 mm or more.
Fair: The peel strength was 50 g/15 mm or more but less than 100 g/15 mm.
Poor: The peel strength was less than 50 g/15 mm.

**[Table 1 - Part 1]**

| | | | | Examples | | | | | | |
|---|---|---|---|---|---|---|---|---|---|---|
| | | | | 1 | 2 | 3 | 4 | 5 | 6 | 7 |
| Aqueous inkjet ink composition for lamination | Ink base | | BASE-B | 34 | - | - | - | - | 34 | 34 |
| | | | BASE- Y | - | 34 | - | - | - | - | - |
| | | | BASE-M | - | - | 34 | - | - | - | - |
| | | | BASE-C | - | - | - | 25 | - | - | - |
| | | | BASE-W | - | - | - | - | 25 | - | - |
| | Aqueous polyurethane resin varnish | | U-A | 17.7 | 17.7 | 17.7 | 17.7 | 17.7 | 3.3 | 33.3 |
| | | | U-B | - | - | - | - | - | - | - |
| | | | U-C | - | - | - | - | - | - | - |
| | | | U-D | - | - | - | - | - | - | - |
| | | | U-E | - | - | - | - | - | - | - |
| | | | U-F | - | - | - | - | - | - | - |
| | | | U-G | - | - | - | - | - | - | - |
| | | | U-H | - | - | - | - | - | - | - |
| | | | U-I | - | - | - | - | - | - | - |
| | Aqueous acrylic resin varnish | | | - | - | - | - | - | - | - |
| | Propylene glycol | | | 35 | 35 | 35 | 40 | 35 | 40 | 30 |
| | Surfactant | | | 1 | 1 | 1 | 1 | 1 | 1 | 1 |
| | Water | | | 12.3 | 12.3 | 12.3 | 16.3 | 21.3 | 21.7 | 1.7 |
| | Total | | | 100 | 100 | 100 | 100 | 100 | 100 | 100 |
| Evaluation results | Storage stability | | Value (%) | 3.2 | 2.5 | 3.0 | 2.0 | 2.0 | 1.8 | 6.5 |
| | | | Evaluation | Good | Good | Good | Good | Good | Good | Fair |
| | Ejection stability | | Evaluation | Good | Good | Good | Good | Good | Good | Fair |
| | Printed image quality | | Evaluation | Good | Good | Good | Good | Good | Good | Good |
| | Dry laminate strength | OPP | Value (g/15 mm) | 160 | 180 | 180 | 200 | 140 | 90 | 180 |
| | | | Evaluation | Good | Good | Good | Good | Good | Fair | Good |
| | | PET | Value (g/15 mm) | 140 | 170 | 170 | 180 | 120 | 70 | 160 |
| | | | Evaluation | Good | Good | Good | Good | Good | Fair | Good |

**[Table 1 - Part 2]**

| | | | | Examples | | | | |
|---|---|---|---|---|---|---|---|---|
| | | | | 8 | 9 | 10 | 11 | 12 |
| Aqueous inkjet ink composition for lamination | Ink base | BASE-B | | 34 | 34 | 34 | 34 | 34 |
| | | BASE- Y | | - | - | - | - | - |
| | | BASE-M | | - | - | - | - | - |
| | | BASE-C | | - | - | - | - | - |
| | | BASE-W | | - | - | - | - | - |
| | Aqueous polyurethane resin varnish | U-A | | - | - | - | - | - |
| | | U-B | | 17.7 | - | - | - | - |
| | | U-C | | - | 17.7 | - | - | - |
| | | U-D | | - | - | 17.7 | - | - |
| | | U-E | | - | - | - | 17.7 | - |
| | | U-F | | - | - | - | - | 17.7 |
| | | U-G | | - | - | - | - | - |
| | | U-H | | - | - | - | - | - |
| | | U-I | | - | - | - | - | - |
| | Aqueous acrylic resin varnish | | | - | - | - | - | - |
| | Propylene glycol | | | 30 | 30 | 30 | 30 | 30 |
| | Surfactant | | | 1 | 1 | 1 | 1 | 1 |
| | Water | | | 17.3 | 17.3 | 17.3 | 17.3 | 17.3 |
| | Total | | | 100 | 100 | 100 | 100 | 100 |
| Evaluation results | Storage stability | | Value (%) | 3.1 | 3.2 | 4.8 | 3.8 | 3.3 |
| | | | Evaluation | Good | Good | Good | Good | Good |
| | Ejection stability | | Evaluation | Good | Good | Good | Good | Good |
| | Printed image quality | | Evaluation | Good | Good | Good | Good | Good |
| | Dry laminate strength | OPP | Value (g/15 mm) | 170 | 170 | 170 | 190 | 130 |
| | | | Evaluation | Good | Good | Good | Good | Good |
| | | PET | Value (g/15 mm) | 160 | 150 | 150 | 150 | 130 |
| | | | Evaluation | Good | Good | Good | Good | Good |

**[Table 1 - Part 3]**

| | | | | | Comparative Examples | | | | |
|---|---|---|---|---|---|---|---|---|---|
| | | | | | 1 | 2 | 3 | 4 | 5 |
| Aqueous inkjet ink composition for lamination | Ink base | | BASE-B | | 34 | 34 | 34 | 34 | 34 |
| | | | BASE- Y | | - | - | - | - | - |
| | | | BASE-M | | - | - | - | - | - |
| | | | BASE-C | | - | - | - | - | - |
| | | | BASE-W | | - | - | - | - | - |
| | Aqueous polyurethane resin varnish | | U-A | | - | - | - | - | - |
| | | | U-B | | - | - | - | - | - |
| | | | U-C | | - | - | - | - | - |
| | | | U-D | | - | - | - | - | - |
| | | | U-E | | - | - | - | - | - |
| | | | U-F | | - | - | - | - | - |
| | | | U-G | | - | 17.7 | - | - | - |
| | | | U-H | | - | - | 15.2 | - | - |
| | | | U-I | | - | - | - | 15.6 | - |
| | Aqueous acrylic resin varnish | | | | - | - | - | - | 17.7 |
| | Propylene glycol | | | | 40 | 35 | 35 | 35 | 35 |
| | Surfactant | | | | 1 | 1 | 1 | 1 | 1 |
| | Water | | | | 25 | 12.3 | 14.8 | 14.4 | 12.3 |
| | Total | | | | 100 | 100 | 100 | 100 | 100 |
| Evaluation results | Storage stability | | | Value (%) | 1.8 | 3.4 | 3.5 | 3.9 | 3.2 |
| | | | | Evaluation | Good | Good | Good | Good | Good |
| | Ejection stability | | | Evaluation | Good | Good | Good | Good | Good |
| | Printed image quality | | | Evaluation | Good | Good | Good | Good | Good |
| | Dry laminate strength | OPP | | Value (g/15 mm) | 30 | 160 | 80 | 90 | 30 |
| | | | | Evaluation | Poor | Good | Fair | Fair | Poor |
| | | PET | | Value (g/15 mm) | 20 | 40 | 40 | 40 | 30 |
| | | | | Evaluation | Poor | Poor | Poor | Poor | Poor |

As demonstrated by the evaluation tests in the examples and comparative examples, the aqueous inkjet ink compositions for lamination of the present invention of Examples 1 to 12 sufficiently have storage stability, ejection stability, and printed image quality needed for an ink composition. Moreover, when two types of plastic film having different polarities, OPP and PET films, were used as base films, both of them achieved excellent dry laminate strength. The results indicate that the aqueous inkjet ink compositions for lamination can be used for both non-polar and polar substrate films.

In contrast, the aqueous inkjet ink composition for laminate of Comparative Example 1, containing no aqueous resin varnish other than that for pigment dispersion, and the aqueous inkjet ink composition for lamination of Comparative Example 5, containing an aqueous acrylic resin varnish, resulted in low dry laminate strength both in the cases of the OPP and PET base films. The ink composition of Comparative Example 2 contains a polyester aqueous polyurethane resin varnish formed from different synthesis components. The ink composition of Comparative Example 3 contains a polyether aqueous polyurethane resin varnish. The ink composition of Comparative Example 4 contains a polycarbonate aqueous polyurethane resin varnish. These ink compositions resulted in excellent dry laminate strength in the case of the OPP film but low dry laminate strength in the case of the PET film.

These results demonstrate that the aqueous inkjet ink composition for lamination of the present invention sufficiently enables production of a printed product such as a food packaging container, and provides the advantages of an aqueous ink composition, namely, reduction of residual solvent, improvement of the printing work environment, prevention of air pollution, and fire safety, as well as the advantage of inkjet printing, namely, efficient adaptation to a decrease in lot size and an increase in product variety.

Moreover, in combination with a primer composition that contains a chlorinated polyolefin resin emulsion and can impart excellent printing image quality and adhesion to ink compositions especially when applied to OPP films, the ink composition allows both OPP and PET films, the major base films in the packaging container field, to achieve excellent dry laminate strength. This means even more efficient adaptation to a decrease in lot size and an increase in product variety. Thus, a combination of one type of primer composition and one type of ink composition can be suitably used for both non-polar and polar substrates films. Such high versatility can be said to be an advantage missing in conventional aqueous inkjet ink compositions for lamination.

Packaging containers obtained using the aqueous inkjet ink composition for lamination of the present invention do not break during processes such as transportation and display and can be easily opened without causing the double bag state.

Thus, the aqueous inkjet ink composition for lamination of the present invention can achieve all of the above aims.

### INDUSTRIAL APPLICABILITY

The aqueous inkjet ink composition for lamination of the present invention provides various advantages such as reduction of residual solvent, improvement of the printing work environment, prevention of air pollution, and fire safety, enables efficient adaptation to the recent decrease in lot size and increase in product variety, has high versatility that allows use for various types of base film, and enables production of a food packaging container that does not break at least during processes such as transportation and display and can be easily opened without causing the double bag state.

## Claims

1. An aqueous inkjet ink composition for lamination, comprising:
a colorant;
an alkali-soluble or self-emulsifying aqueous polyurethane resin satisfying the following condition 1; and
an aqueous medium:
Condition 1: the alkali-soluble or self-emulsifying aqueous polyurethane resin is a reaction product of reaction components including hexamethylene diisocyanate, at least one selected from the group of polyester diol compounds represented by the following formula 1, and an acid group-containing diol compound: 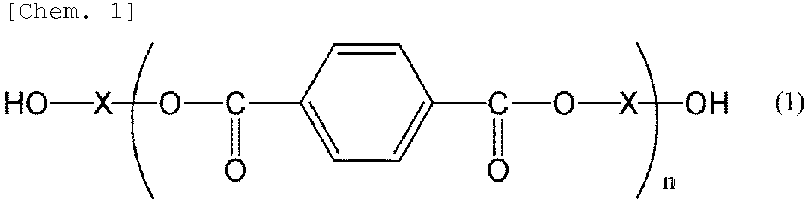
wherein Xs are each independently a hydrocarbon group represented by -CH₂-CH₂-CH₂-CH₂-CH₂-CH₂- or -CH₂-CH₂-CH(CH₃)-CH₂-CH₂-, and n is an integer of 2 to 20.

2. The aqueous inkjet ink composition for lamination according to claim 1,
wherein the amount of the alkali-soluble or self-emulsifying aqueous polyurethane resin is 1.0 to 10.0% by mass relative to the total mass of the aqueous inkjet ink composition for lamination.

3. The aqueous inkjet ink composition for lamination according to claim 1 or 2,
wherein the alkali-soluble or self-emulsifying aqueous polyurethane resin has a weight average molecular weight of 2,000 to 100,000.

4. The aqueous inkjet ink composition for lamination according to any one of claims 1 to 3,
wherein the alkali-soluble or self-emulsifying aqueous polyurethane resin has an acid value of 5 to 100 mg KOH/g.

5. A printed product comprising:
a base film;
a coating layer containing a primer composition; and
a printed layer containing the aqueous inkjet ink composition for lamination according to any one of claims 1 to 4,
the base film, the coating layer, and the printed layer being laminated in the stated order,
wherein the primer composition satisfies the following condition 2:
Condition 2: the primer composition contains a water-soluble polyvalent metal salt, a chlorinated polyolefin emulsion, at least one selected from the group consisting of an acrylic emulsion and a vinyl acetate emulsion, and water, or contains a water-soluble polyvalent metal salt, a hydrazine derivative containing at least two hydrazine residues, at least one selected from the group consisting of an acrylic emulsion and a vinyl acetate emulsion, and water.

6. A laminated product comprising:
the printed product according to claim 5; and
a sealant film laminated on a surface of the printed layer of the printed product, the surface being opposite to a surface having the coating layer thereon.

7. A laminating method comprising:
forming a coating layer by applying a primer composition to one surface of a base film;
subsequently forming a printed layer by printing the aqueous inkjet ink composition for lamination according to any one of claims 1 to 4 on a surface of the coating layer by inkjet printing;
subsequently applying an adhesive for lamination to a surface of the printed layer; and then
laminating a sealant film.

## Patentansprüche

1. Wässrige Tintenstrahltintenzusammensetzung zur Lamination, umfassend:
einen Farbstoff;
ein alkalilösliches oder selbstemulgierendes wässriges Polyurethanharz, das die folgende Bedingung 1 erfüllt; und
ein wässriges Medium;
Bedingung 1: das alkalilösliche oder selbstemulgierende wässrige Polyurethanharz ist ein Reaktionsprodukt von Reaktionskomponenten, beinhaltend Hexamethylendiisocyanat, wobei mindestens eine aus der Gruppe von Polyesterdiolkomponenten, die durch die folgende Formel 1 dargestellt sind, ausgewählt ist, und eine säurengruppenhaltige Diolverbindung: 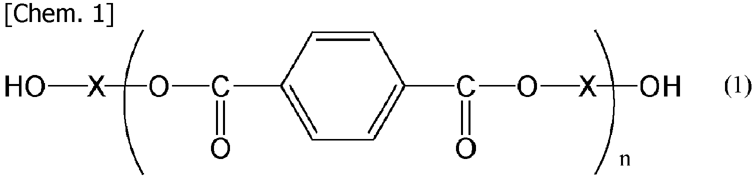 wobei die X jeweils unabhängig eine Kohlenwasserstoffgruppe sind, die durch -CH₂-CH₂-CH₂-CH₂-CH₂-CH₂- oder -CH₂-CH₂-CH(CH₃)-CH₂-CH₂- dargestellt sind, und n eine ganze Zahl von 2 bis 20 ist.

2. Wässrige Tintenstrahltintenzusammensetzung zur Lamination nach Anspruch 1,
wobei die Menge des alkalilöslichen oder selbstemulgierenden wässrigen Polyurethanharzes 1,0 bis 10,0 Massen-%, bezogen auf die Gesamtmasse der wässrigen Tintenstrahltintenzusammensetzung zur Lamination, beträgt.

3. Wässrige Tintenstrahltintenzusammensetzung zur Lamination nach Anspruch 1 oder 2,
wobei das alkalilösliche oder selbstemulgierende wässrige Polyurethanharz eine gewichtsmittlere Molmasse von 2000 bis 100.000 aufweist.

4. Wässrige Tintenstrahltintenzusammensetzung zur Lamination nach einem der Ansprüche 1 bis 3,
wobei das alkalilösliche oder selbstemulgierende wässrige Polyurethanharz eine Säurezahl von 5 bis 100 mg KOH/g aufweist.

5. Druckprodukt, umfassend:
eine Grundfolie;
eine Beschichtungsschicht, enthaltend eine Primerzusammensetzung; und
eine Druckschicht, enthaltend die wässrige Tintenstrahltintenzusammensetzung zur Lamination nach einem der Ansprüche 1 bis 4,
wobei die Grundfolie, die Beschichtungsschicht und die Druckschicht in der angegebenen Reihenfolge laminiert sind,
wobei die Primerzusammensetzung die folgende Bedingung 2 erfüllt:
Bedingung 2: die Primerzusammensetzung enthält ein wasserlösliches mehrwertiges Metallsalz, eine chlorierte Polyolefin-Emulsion, mindestens eine, die aus der Gruppe bestehend aus einer Acryl-Emulsion und einer Vinylacetat-Emulsion ausgewählt ist, und Wasser oder enthält ein wasserlösliches mehrwertiges Metallsalz, ein Hydrazinderivat, enthaltend mindestens zwei Hydrazinreste, mindestens eine, die aus der Gruppe bestehend aus einer Acryl-Emulsion und einer Vinylacetat-Emulsion ausgewählt ist, und Wasser.

6. Laminatprodukt, umfassend:
das Druckprodukt nach Anspruch 5; und
eine Versiegelungsfolie, die auf eine Oberfläche der Druckschicht des Druckprodukts laminiert ist, wobei die Oberfläche einer Oberfläche gegenüber liegt, die die Beschichtungsschicht darauf aufweist.

7. Laminationsverfahren, umfassend:
Bilden einer Beschichtungsschicht durch Aufbringen einer Primerzusammensetzung auf eine Oberfläche einer Grundfolie;
anschließend Bilden einer Druckschicht durch Drucken der wässrigen Tintenstrahltintenzusammensetzung zur Lamination nach einem der Ansprüche 1 bis 4 auf eine Oberfläche der Beschichtungsschicht durch Tintenstrahldruck;
anschließend Aufbringen eines Klebstoffs zur Lamination auf eine Oberfläche der Druckschicht; und dann
Laminieren einer Versiegelungsfolie.

## Revendications

1. Composition d'encre pour jet d'encre aqueuse pour stratification, comprenant :
un colorant ;
une résine de polyuréthane aqueuse soluble dans un alcali ou auto-émulsionnante satisfaisant la condition 1 suivante ; et
un milieu aqueux :
Condition 1 : la résine de polyuréthane aqueuse soluble dans un alcalin ou auto-émulsionnante est un produit de réaction de constituants de réaction incluant du diisocyanate d'hexaméthylène, au moins un choisi dans le groupe de composés de polyester diol représentés par la formule 1 suivante, et un composé de diol contenant un groupe acide : 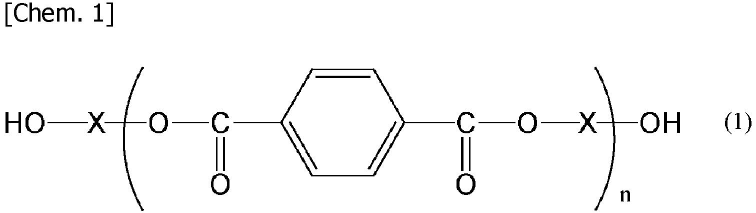
dans laquelle les X sont chacun indépendamment un groupe hydrocarboné représenté par -CH₂-CH₂-CH₂-CH₂-CH₂-CH₂- ou -CH₂-CH₂-CH(CH₃)-CH₂-CH₂-, et n est un nombre entier de 2 à 20.

2. Composition d'encre pour jet d'encre aqueuse pour stratification selon la revendication 1,
dans laquelle la quantité de la résine de polyuréthane aqueuse soluble dans un alcali ou auto-émulsionnante est de 1,0 à 10,0 % en masse par rapport à la masse totale de la composition d'encre de jet d'encre aqueuse pour stratification.

3. Composition d'encre pour jet d'encre aqueuse pour stratification selon la revendication 1 ou 2,
dans laquelle la résine de polyuréthane aqueuse soluble dans un alcali ou auto-émulsionnante présente une masse moléculaire moyenne en masse de 2 000 à 100 000.

4. Composition d'encre pour jet d'encre aqueuse pour stratification selon l'une quelconque des revendications 1 à 3,
dans laquelle la résine de polyuréthane aqueuse soluble dans un alcali ou auto-émulsionnante présente un indice acide de 5 à 100 mg de KOH/g.

5. Produit imprimé comprenant :
un film de base ;
une couche de revêtement contenant une composition d'apprêt ; et
une couche imprimée contenant la composition d'encre pour jet d'encre aqueuse pour stratification selon l'une quelconque des revendications 1 à 4,
le film de base, la couche de revêtement, et la couche imprimée étant stratifiés dans l'ordre cité,
dans lequel la composition d'apprêt satisfait la condition 2 suivante :
Condition 2 : la composition d'apprêt contient un sel de métal polyvalent soluble dans l'eau, une émulsion de polyoléfine chlorée, au moins un choisi dans le groupe consistant en une émulsion acrylique et une émulsion d'acétate de vinyle, et de l'eau, ou contient un sel de métal polyvalent soluble dans l'eau, un dérivé d'hydrazine contenant au moins deux résidus d'hydrazine, au moins un choisi dans le groupe consistant en une émulsion acrylique et une émulsion d'acétate de vinyle, et de l'eau.

6. Produit stratifié comprenant :
le produit imprimé selon la revendication 5 ; et
un film d'étanchéité stratifié sur une surface de la couche imprimée du produit imprimé, la surface étant opposée à une surface présentant la couche de revêtement sur son dessus.

7. Procédé de stratification comprenant :
la formation d'une couche de revêtement par application d'une composition d'apprêt sur une surface d'un film de base ;
la formation subséquente d'une couche imprimée par impression de la composition d'encre pour jet d'encre aqueuse pour stratification selon l'une quelconque des revendications 1 à 4 sur une surface de la couche de revêtement par impression par jet d'encre ;
l'application subséquente d'un adhésif pour stratification sur une surface de la couche imprimée ; et puis
la stratification d'un film d'étanchéité.
